Europäisches Patentamt

European Patent Office

Office européen des brevets

(19)

(11) Veröffentlichungsnummer: **0 354 506 B1**

(12)  # EUROPÄISCHE PATENTSCHRIFT

(45) Veröffentlichungstag der Patentschrift:
18.12.91 Patentblatt 91/51

(51) Int. Cl.$^5$: **F28C 1/14**

(21) Anmeldenummer: **89114511.2**

(22) Anmeldetag: **05.08.89**

(54) Wärmeaustauscher für wahlweisen Nass- und Trockenbetrieb.

(30) Priorität: **10.08.88 DE 8810151 U**

(43) Veröffentlichungstag der Anmeldung:
**14.02.90 Patentblatt 90/07**

(45) Bekanntmachung des Hinweises auf die
Patenterteilung:
**18.12.91 Patentblatt 91/51**

(84) Benannte Vertragsstaaten:
**AT BE CH DE ES FR GB IT LI NL SE**

(56) Entgegenhaltungen:
**EP-A- 0 010 118
EP-A- 0 151 547
EP-A- 0 237 486
DE-A- 3 135 783**

(73) Patentinhaber: **Röhm GmbH
Kirschenallee Postfach 4242
W-6100 Darmstadt 1 (DE)**

(72) Erfinder: **Pöhlmann, Klaus Ernst
Silcherweg 9
W-6100 Darmstadt Wixhausen (DE)**
Erfinder: **Heeren, Hermann
Herrenwall 12a
W-2943 Esens (DE)**
Erfinder: **Berkenbusch, Stefan
Rüdesheimer Strasse 16
W-6200 Wiesbaden (DE)**

## Beschreibung

Die Erfindung betrifft einen Wärmeaustauscher für wahlweisen Naß- und Trockenbetrieb zum Einsatz in Hydridkühltürmen nach dem Oberbegriff des Patentanspruchs 1. Unter Hybridkühltürmen werden Kühltürme verstanden, die sowohl im Naßbetrieb als auch im Trockenbetrieb arbeiten können.

## Stand der Technik

Naßkühltürme haben den Nachteil, daß die austretenden Dampfschwaden in Form von Nebel und Glatteisbildung das Umfeld belasten. Um diesen Nachteil zu vermeiden, wurden Trockenkühltürme errichtet, in denen das zu kühlende Wasser nur durch Wärmeaustausch mit der Luft, jedoch nicht durch Verdunstungskühlung Wärmeenergie abgibt. Dadurch ist ihr Wirkungsgrad, bezogen auf durchströmende Luft, geringer und eine entsprechend größere Dimensionierung erforderlich.

In Hybridkühltürmen wird das Prinzip der Naß- und der Trockenkühlung kombiniert; sie enthalten daher einen für reine Naßkühlung und einen für reine Trockenkühlung eingerichteten Teil, die so aufeinander abgestimmt sind, daß auch unter ungünstigen Temperatur- und Luftfeuchtigkeitswerten die störende Schwadenbildung vermieden wird. Die Steigerung des Wirkungsgrades gegenüber reinen Trockenkühltürmen ist durch diese Bedingung begrenzt. Würde man das Verhältnis des Naß- zum Trockenteil so auslegen, daß nur unter günstigen Witterungsbedingungen ein schwadenfreier Betrieb möglich ist, so wäre zwar der Wirkungsgrad höher, aber bei ungünstiger Witterung würden wieder Schwaden auftreten.

Für den Einbau in Hybridkühltürme werden in EP-A-237 486 Kühlelemente vorgeschlagen, bei denen kühlende Luft um waagerecht angeordnete Rohre strömt, durch die das zu kühlende Fluid strömt. Im Naßbetrieb werden die Rohre an der Außenseite mit Wasser berieselt. Auch bei einem aus DE-A-3135783 bekannten Kühlturm zur trockenen und nassen Wärmeabfuhr an die Umgebungsluft wird das zu kühlende Wasser, nachdem es durch die Innenräume der Kühlrohre geströmt ist, auf deren Außenseite rieseln gelassen.

## Aufgabe und Lösung

Es wurde eine Möglichkeit gesucht, den Wirkungsgrad von Hybridkühltürmen ohne Gefahr der Schwadenbildung bei ungünstiger Witterung zu verbessern. Zur Lösung dieser Aufgabe stellte sich die weitere Aufgabe, einen Wärmeaustauscher für wahlweisen Naß- und Trockenbetrieb zu schaffen.

Gegenstand der Erfindung ist ein Wärmeaustauscher für wahlweisen Naß- und Trockenbetrieb, enthaltend wenigstens einen Wärmeaustauscherkörper mit einer Vielzahl von parallel durchströmbaren Rohren, die in zwei gegenüberliegenden Ebenen münden, und mit im Kreuzstrom dazu durchströmbaren Zwischenräumen, der erfindungsgemäß in der Weise ausgebildet ist, daß er in einem Hybrid-Kühlturm durch natürlichen Zug von Luft durchströmt wird, daß die Rohre im wesentlichen senkrecht angeordnet sind und von unten nach oben von Luft durchströmbar sind, und daß er ein Wassereinleitungssystem zur Einleitung von tropfenförmig verteiltem Wasser in wenigstens einen Teil der Rohre sowie ein Stellorgan zur Regulierung oder Absperrung des durch das Wassereinleitungssystem verteilten Wassers aufweist.

Der erfindungsgemäße Wärmeaustauscher ermöglicht ein Kühlverfahren, bei dem das zu kühlende Fluid durch die Zwischenräume zwischen den Rohren und Luft durch natürlichen Zug von unten nach oben durch die senkrecht angeordneten Rohre geleitet werden und mittels des Wassereinleitungssystems tropfenförmiges Wasser in die Rohre eingeleitet und die eingeleitete Wassermenge mittels des Stellorgans entsprechend der Luftfeuchtigkeit so begrenzt wird, daß am Kopf des Kühlturmes keine oder höchstens kurzreichende Schwaden entstehen.

Der neue Wärmeaustauscher eignet sich zur Kühlung von strömenden gasförmigen oder bevorzugt flüssigen Fluiden, insbesondere im Temperaturbereich von 20 bis 100°C. Vorzugsweise wird Wasser gekühlt. Der neue Wärmeaustauscher ist zum Einsatz in einem Hybridkühlturm bestimmt und gestattet es, das Verhältnis des Naßbetriebs zum Trockenbetrieb entsprechend der Luftfeuchtigkeit so zu verschieben, daß zu jeder Zeit der höchstmögliche Wirkunggrad bei schwadenfreiem Betrieb erreichbar ist. Nimmt die Luftfeuchigkeit bei gleichbleibenden Außentemperatur zu, so wird der Naßbetrieb zugunsten des Trockenbetriebs verkleinert und umgekehrt. Die Steuerung erfolgt zweckmäßigerweise dadurch, daß das Stellorgan durch Meßfühler für die Lage des Taupunktes und der Temperatur der umgebenden Luft beeinflußt wird.

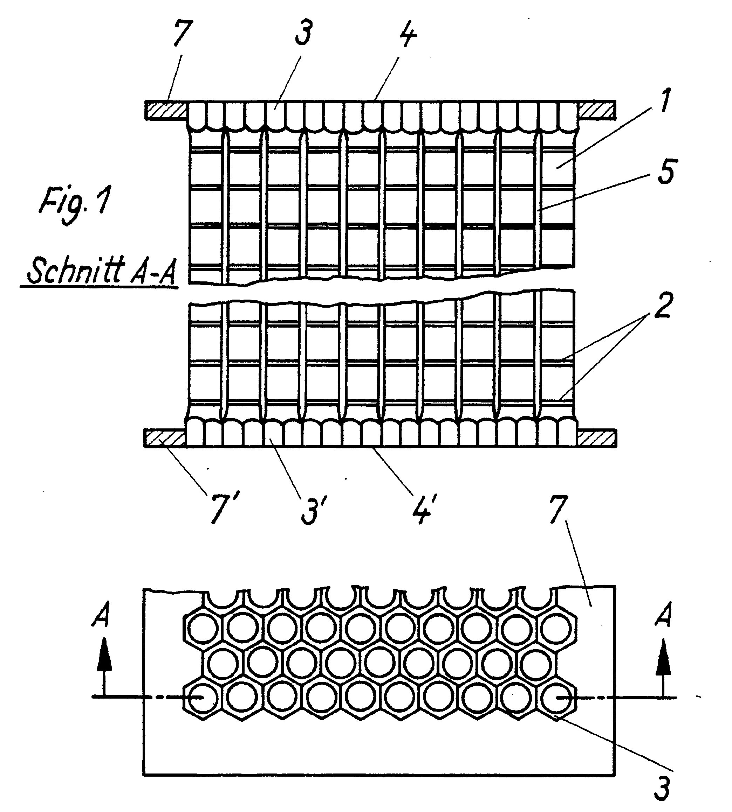

Die Erfindung wird durch die Figuren 1 bis 3 näher erläutert.

**Figur 1** zeigt im unteren Teil einen waagerechten Schnitt und im oberen Teil einen senkrechten Schnitt in der Ebene A-A durch einen Wärmeaustauscherkörper parallel zu den durchströmbaren Rohren;

**Figur 2** zeigt einen senkrechten Schnitt durch einen Hybridkühlturm, in dem eine Mehrzahl von Wärmeaustauscherkörpern in einer Ebene angeordnet ist;

**Figur 3** zeigt eine ähnliche Anordnung eines Hybridkühlturms mit einer anderen Wasserführung.

## Wirkungsweise

Abweichend vom herkömmlichen Aufbau von Trockenkühltürmen strömt in den Wärmaustauschern die Luft durch die Rohre und das zu kühlende Fluid durch die Zwischenräume 5 zwischen den Rohren. Im Kühlturm sind die Rohre in der Regel senkrecht angeordnet und werden durch natürlichen Zug von unten nach oben durchströmt. Der natürliche Zug kann gegebenenfalls durch eine Zwangsbelüftung ergänzt oder ersetzt werden. Bei reinem Trockenbetrieb ist die Kühlleistung auf den Wärmeübergang von dem zu kühlenden Fluid über die Rohrwandung auf die strömende Luft beschränkt.

Die gleichen Wärmeaustauscherelemente können wenigstens zum Teil auch naß betrieben werden. Zu diesem Zweck wird mittels des Wassereinleitungssystems tropfenförmig verteiltes Wasser in wenigstens einen Teil der Rohre eingeleitet. Vorzugsweise wird das Wasser durch Sprühdüsen 6, die vor den Eingängen oder den Mündungen der Rohre angebracht sind, auf die Innenwände der Rohre gesprüht und diese mit Wasser benetzt. Die Anordnung der Sprühdüsen 6 unterhalb des Wärmeaustauschers hat den Vorteil, daß der Sprühnebel mit der einströmenden Luft in die Rohre gefördert wird. Die Anordnung des Wassereinleitungssystems oberhalb des Wärmeaustauschers ist sinnvoll, wenn nur ein Teil des tropfenförmig verteilten Wassers verdunstet wird und ein wesentlicher Teil an der Unterseite des Wärmeaustauschers abfließt. Es ist nicht erforderlich, an jeder Rohrmündung eine Düse anzuordnen. In der Regel kann das Wasser aus einem geeigneten Abstand auf die Mündungen von beispielsweise 7 bis 20 Rohren oder mehr verteilt werden.

Das tropfenförmig verteilte Wasser kann in der strömenden Luft mehr oder weniger stark verdampfen und dabei die Temperatur der Luft vermindern. Dadurch nimmt ihre Kühlkapazität und gleichzeitig der Wirkungsgrad der Kühlanlage zu. Soweit durch das Wasser die Innenwände der Rohre benetzt werden, verdampft es von dort und bewirkt eine unmittelbare Kühlung der Rohre.

## Betrieb eines Hybridkühlturms

Ein mit Wärmeaustauschern ausgerüsteter Hybridkühlturm wird in Abhängigkeit von der Luftfeuchtigkeit, d.h. von der Temperatur der umgebenden Luft und ihrem Taupunkt betrieben. Beim reinen Trockenbetrieb nimmt die Temperatur beim Durchgang durch den Kühlturm zu, wobei sich der Abstand zum Taupunkt vergrößert. Beim reinen Naßbetrieb steigt die Temperatur ebenfalls, aber der Abstand zum Taupunkt verringert sich infolge der Feuchtigkeitsaufnahme. Am Kopf des Kühlturms tritt die feuchte Abluft aus und vermischt sich mit der kühleren Umgebungsluft. Dabei kann der Taupunkt erreicht oder unterschritten werden, so daß die unerwünschte Schwadenbildung auftritt. Bei weiterer Durchmischung mit der Umgebungsluft lösen sich die Schwaden wieder auf. Es wird angestrebt, das Volumen der Umgebungsluft, mit der die Abluft bis zur Auflösung der Schwaden vermischt werden muß, möglichst zu begrenzen, so daß allenfalls kurzreichende Schwaden am Kopf des Kühlturmes auftreten.

Zu diesem Zweck wird bei zunehmender rel. Luftfeuchtigkeit der Umgebungsluft die Zufuhr des tropfenförmig verteilten Wassers in die Rohre des Wärmeaustauschers vermindert oder umgekehrt bei abnehmender rel. Luftfeuchtigkeit die Wasserzufuhr verstärkt. Dies geschieht am zweckmäßigsten durch Verkleinerung bzw. Vergrößerung des Anteils der Wärmeaustauscherfläche, die im Naßbetrieb arbeitet. Dabei ist auch der Abstand der Temperatur der Abluft zur Temperatur der Umgebungsluft von großer Bedeutung. Die Erfindung gestattet es, unter Beachtung der aufgeführten Kriterien das Verhältnis von gleichzeitigem Naß- und Trockenbetrieb so aufeinander abzustimmen, daß jederzeit die größtmögliche Kühlleistung bei minimaler Schwadenbildung erreicht wird.

Diese Abstimmung kann im einfachsten Fall empirisch erfolgen, indem die Wasserzufuhr solange verstärkt wird, bis eine gerade noch zulässige Schwadenbildung auftritt. Vorzugsweise wird die Abstimmung selbsttätig durchgeführt. Zu diesem Zweck werden die rel. Luftfeuchtigkeit und die Temperatur der Außenluft durch bekannte geeignete Meßfühler 18 ermittelt und die Meßwerte einer Steuereinheit 17 zugeleitet, die mittels der Stellorgane 16 im Wasserleitungssystem die Wasserzufuhr so regelt, daß nach dem h-x-Diagramm für Luft nach Mollier (vgl. Dubbels Taschenbuch für den Maschinenbau, Herausgeber Saas, Couché, Leitner, 13. Aufl. 1974, S. 462, Bild 15) ein weitgehend schwadenfreier Betrieb gewährleistet ist.

Das Stellorgan kann die Wirkung haben, daß es die Wasserzufuhr zu den Düsen 6 oder zu einem Teil von ihnen drosselt, so daß entsprechende dem erforderlichen Betriebszustand mehr oder weniger Wasser in die betroffenen Rohre eintritt. Vorzugsweise wird jedoch durch das Stellorgan die Wasserzufuhr zu einem variablen Teil der Rohre abgesperrt, so daß jedes Rohr entweder trocken oder naß betrieben wird. Zweckmäßigerweise wird die Wasserzufuhr zu einzelnen Düsen 6 oder Gruppen von Düsen 6 entsprechend dem Bedarf geöffnet oder geschlossen. Dementsprechend wird Wasser in einen Teil der Rohre oder einen Teil der Wärmeaustauscherkörper, die zusammen den erfindungsgemäßen Wärmeaustauscher bilden, eingeführt und die Wasserzufuhr zu dem verbleibenden Teil unterbrochen.

Bei einer bevorzugten Ausführungsform der letztgenannten Bauweise sind der Trocken- und der Naßbereich in viele kleine vermischt angeordnete Inseln aufgeteilt, beispielsweise von der Größe eines oder mehrerer Wärmeaustauscherkörper. Dadurch wird eine nahezu ideale Durchmischung von trockener und feuchter Abluft schon innerhalb des Kühlturms erreicht, so daß sich die am Kopf austretende Abluft schnell und schwadenfrei mit der Umgebungsluft vermischen kann. Im Gegensatz dazu ist in herkömmlichen Hybridkühltürmen eine Trockenbetriebszone ringförmig um eine zentrale Naßbetriebszone fest angeordnet. Die feuchte Abluft aus der Naßzone vermischt sich innerhalb des Kühlturmes oft nur unvollkommen mit der trockenen Abluft aus der Randzone und bildet selbst dann noch weitreichende Schwaden, wenn der Anteil der trockenen Abluft bei gleichmäßiger Durchmischung zur Unterdrückung der Schwadenbildung ausgereicht hätte.

## Aufbau des Wärmeaustauschers

Bei einer bevorzugten Ausführungsform haben die Rohre 1 einen kreisrunden Querschnitt und in Abständen ihrer Längserstreckung nach innen gerichtete Sicken 2 zur Verwirbelung der darin strömenden Luft. An ihren Enden 3, 3'sind die Rohre 1 sechseckförmig aufgeweitet und in diesem Bereich zu einem Sechseckwabenmuster miteinander verbunden. Die Rohre 1 münden also in den Ebenen 4, 4'.

Die Rohrdurchmesser d betragen in der Regel mehr als 75%, vorzugsweise mehr als 90% der Abstände a zwischen den Rohrachsen benachbarter Rohre 1. Die Rohrquerschnitte machen dann mehr als 50 und vorzugsweise 75 bis 90% der gesamten Querschnittsfläche des Wärmeaustauscherkörpers aus ; darunter ist die von der Ummantelung umschlossene Fläche zu verstehen. Der verbleibende Teil der Querschnittsfläche, d.h. weniger als 50%, vorzugsweise 10 bis 25% der Querschnittsfläche, bilden Zwischenräume 5, die kreuzweise zu den Rohren 1 von dem zu kühlenden Fluid durchströmbar sind. Vorzugsweise haben die Rohre 1 Innendurchmesser von 10 bis 100 mm und eine Länge von 0,5 bis 2 m. Jeweils 200 bis 20 000 Rohre werden zu Wärmeaustauscherkörpern mit umlaufendem Einbauflansch 7 verschweißt.

Die beschriebene Gestaltung mit sechseckförmig aufgeweiteten und miteinander verbundenen Rohrenden 3 gestattet eine für den Wärmeaustausch optimale enge Packung der Rohre 1. Sie bestehen vorzugsweise aus Kunststoff und sind im Bereich der Rohrenden 3 miteinander verschweißt. Verfahren zum Verschweißen von Rohrbündeln zu zusammenhängenden Wärmeaustauscherkörpern sind aus DE-A 35 22 190 bekannt. Flansche können gemäß DE-A 38 13 882 (z.Z. noch nicht veröffentlicht) angebracht werden. Geeignet sind Kunststoffe, die gegenüber Wasser und dem zu kühlenden Fluid, das vorzugsweise ebenfalls Wasser ist, bei den höchstmöglichen Beriebstemperaturen, die am Eintrittspunkt des zu kühlenden Fluids in den Wärmeaustauscher auftreten, hinreichend beständig sind. Als Beispiele seien Polypropylen, Polyvinylchlorid, Polystyrol bzw. ABS, Polycarbonat, Polysulfon, Polyphenylenoxid, Polyetherketone, u.a. genannt.

Die herkömmliche Bauweise von Wärmeaustauschern aus zwei Lochplatten als Stirnflächen und in die Löcher eingeschweißten Rohren ist ebenfalls geeignet, jedoch aufwendiger in der Herstellung und weniger strömungsgünstig.

Es ist zweckmäßig, eine Vielzahl von Wärmeaustauscherkörpern mit beispielsweise rechteckförmigem Grundriss mittels Montageflanschen 7, 7' zu einer großflächigen Wärmeaustauscherebene 23, die den Querschnitt des Hybridkühlturmes im wesentlichen ausfüllt, oder zu mehreren derartigen Ebenen zusammenzufügen und zusammen mit dem Wassereinleitungssystem auf einem Traggerüst 9 abzustützen. Für die Zu- und Abführung des zu kühlenden Fluids sind Rohrleitungen 10, 11 vorgesehen, die zu den Rohrzwischenräumen 5 führen. Ein weiterer Bestandteil einer zweckmäßigen Ausgestaltung eines Hybridkühlturms ist ein Sammelteich 12 für das aus den Wärmeaustauschern 1 abtropfende Wasser. Dort kann auch eine Frischwasserleitung 13 einmünden. Von dem Sammelteich 12 gelangt das Wasser über eine Umwälzpumpe 14 und eine Leitung 15 zu den Stellorganen. Als solche eignen sich mit Stellmotoren ausgerüstete Ventile 16, deren Stellmotoren durch eine Steuereinheit 17 in Verbindung mit Meßfühlern 18, 19 für die Temperaturen und Taupunkte der Umgebungs- und der Abluft angetrieben werden. In einem Hybridkühlturm für einen Kraftwerksblock üblicher Größe werden mehrere derartige Ventile 16 benötigt.

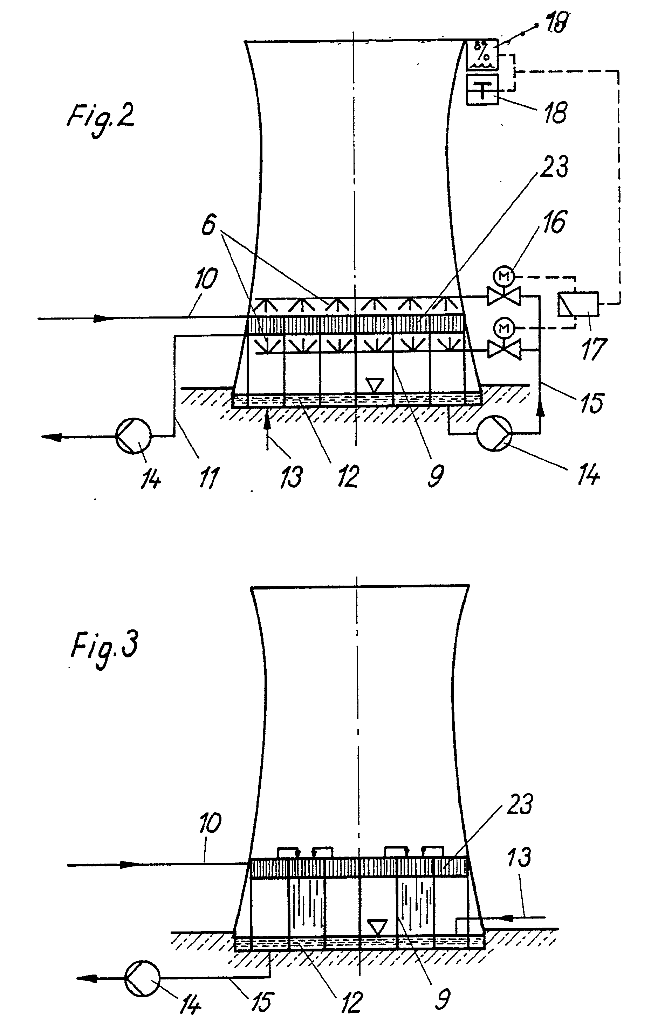

Bei einer anderen Ausführungsform eines Hybridkühlturmes gemäß Figur 3, die ausschließlich zum Kühlen von Wasser verwendet wird, sind die Kreisläufe des zu kühlenden Wassers und des tropfenförmig zu verteilenden Wassers ähnlich wie bei einem herkömmlichen Naßkühlturm verbunden. Im Gegensatz dazu ist hier eine Ebene 23 aus Wärmeaustauschern ganz oder zum Teil so ausgebildet, daß das Wasser zunächst im trockenen Verfahren durch einen mehr oder minder großen Anteil der Wärmetauscherkörper geführt wird und anschließend auf einem mehr oder minder großen Anteil der Wärmetauscherkörper als Naßteil auf die Innenseite der Rohre in direkte Verbindung mit der durchströmenden Luft umgeleitet wird. Die jeweiligen Anteile richten sich nach der Temperatur und der relativen Feuchtigkeit der umgebenden Luft. Das aus den Rohren abfließende gekühlte Wasser sammelt sich in dem unter dem Turm befindlichen Teich 12 und wird von dort über die Umwälzpumpe 14 und die Leitung 15 zur Wärmequelle zurückgefördert.

**Patentansprüche**

1. Wärmeaustauscher für wahlweisen Naß- und Trockenbetrieb, enthaltend wenigstens einen Wärmeaustauscherkörper mit einer Vielzahl von parallel durchströmbaren Rohren, die in zwei gegenüberliegenden Ebenen münden, und mit im Kreuzstrom dazu durchströmbaren Zwischenräumen, dadurch gekennzeichnet, daß er in einem Hybrid-Kühlturm durch natürlichen Zug von Luft durchströmt wird, daß die Rohre im wesentlichen senkrecht angeordnet sind und von unten nach oben von Luft durchströmbar sind, und daß er ein Wassereinleitungssystem zur Einleitung von tropfenförmig verteiltem Wasser in wenigstens einen Teil der Rohre sowie ein Stellorgan zur Regulierung oder Absperrung des durch das Wassereinleitungssystem verteilten Wassers aufweist.

2. Wärmeaustauscher nach Anspruch 1, dadurch gekennzeichnet, daß das Wassereinleitungssystem eine Mehrzahl von Düsen enthält, die vor den Mündungen der Rohre so angeordnet sind, daß damit Wasser tropfenförmig in wenigstens einen Teil der Rohre eingesprüht werden kann.

3. Wärmeaustauscher nach Anspruch 1 oder 2, dadurch gekennzeichnet, daß die Rohre mehr als 50, vorzugsweise 75 bis 90% der Querschnittsfläche des Wärmeaustauschers einnehmen.

4. Wärmeaustauscher nach einem oder mehreren der Ansprüche 1 bis 3, dadurch gekennzeichnet, daß er aus einer Vielzahl von Wärmeaustauscherkörpern zusammengesetzt ist und daß das Stellorgan auf die Einleitung von Wasser in die Rohre jeweils eines oder mehrerer ganzer Wärmeaustauscherkörper einwirkt.

5. Wärmeaustauscher nach einem oder mehreren der Ansprüche 1 bis 4, dadurch gekennzeichnet, daß das Wassereinleitungssystem zur Einleitung von Wasser in einen Teil der Rohre oder der Wärmeaustauscherkörper ausgebildet ist und daß dieser Teil bzw. der verbleibende Teil der Rohre oder der Wärmeaustauscherkörper, der nicht zur Einleitung von Wasser ausgebildet ist, in eine Mehrzahl von vermischt angeordneten Inseln aufgeteilt ist.

6. Wärmeaustauscher nach Anspruch 4 oder 5, dadurch gekennzeichnet, daß die Wärmeaustauscherkörper in einer oder mehreren Ebenen angeordnet sind.

7. Wärmeaustauscher nach einem oder mehreren der Ansprüche 1 bis 6, dadurch gekennzeichnet, daß das Wassereinleitungssystem oberhalb der Wärmeaustauscherkörper in der Weise angeordnet ist, daß das Wasser unter Betriebsbedingungen im Gegenstrom zu der Luft in die Rohre geleitet wird.

8. Wärmeaustauscher nach einem oder mehreren der Ansprüche 1 bis 6, dadurch gekennzeichnet, daß das Wassereinleitungssystem unterhalb der Wärmeaustauscherkörper in der Weise angeordnet ist, daß das Wasser unter Betriebsbedingungen im Gleichstrom mit der Luft in die Rohre geleitet wird.

**Claims**

1. Heat exchanger for selective wet and dry operation, containing at least one heat exchanger member having a plurality of pipes through which medium can flow in parallel and which open into two opposing planes, and with interstices through which medium can flow in cross-current thereto, characterised in that air flows through said heat exchanger in a hybrid cooling tower by natural draught, in that the pipes are arranged substantially vertically and air is able to flow through them from bottom to top, and in that the heat exchanger has a water inlet system for supplying water in droplet form to at least some of the pipes and an adjusting member for regulating or shutting off the water distributed through the water inlet system.

2. Heat exchanger according to claim 1, characterised in that the water inlet system contains a plurality of nozzles which are arranged in front of the mouths of the pipes in such a way that water can be sprayed in droplet form into at least some of the pipes.

3. Heat exchanger according to claim 1 or 2, characterised in that the pipes take up more than 50 and preferably from 75 to 90% of the cross-sectional area of the heat exchanger.

4. Heat exchanger according to one or more of claims 1 to 3, characterised in that it is made up of a plurality of heat exchanger members and in that the adjusting member acts on the supply of water into the pipes of one or more complete heat exchanger members.

5. Heat exchanger according to one or more of claims 1 to 4, characterised in that the water inlet system is constructed to supply water to some of the pipes or heat exchanger members and that this portion or the remaining portion of pipes or heat exchanger members which are not adapted to receive a supply of water is divided up into a plurality of miscellaneously arranged islands.

6. Heat exchanger according to claim 4 or 5, characterised in that the heat exchanger members are arranged in one or more planes.

7. Heat exchanger according to one or more of claims 1 to 6, characterised in that the water inlet system is arranged above the heat exchanger members in such a way that, under operating conditions, the water is introduced into the pipes in counter-current to the air.

8. Heat exchanger according to one or more of claims 1 to 6, characterised in that the water inlet system is arranged below the heat exchanger members in such a way that, under operating conditions, the water is introduced into the pipes in parallel flow with the air.

## Revendications

1. Echangeur thermique pouvant être au choix exploité au mouillé et à sec, contenant au moins un corps échangeur de chaleur comportant une multiplicité de tubes qui sont susceptibles d'être parcourus en parallèle par un courant et qui débouchent dans deux plans opposés, ainsi que des espaces intermédiaires susceptibles d'être parcourus par un courant inverse par rapport à celui des tubes, caractérisé en ce qu'il est parcouru par un courant d'air sous l'effet du tirage naturel dans une tour de refroidissement hybride, en ce que les tubes sont disposés de façon sensiblement verticale et peuvent être parcourus de bas en haut par le courant d'air, et en ce qu'il comporte un système d'admission d'eau pour l'introduction d'eau sous forme de gouttes dans une partie au moins des tubes, ainsi qu'un organe de commande pour le réglage ou la coupure de l'eau distribuée en gouttes par le système d'admission d'eau.

2. Echangeur thermique selon la revendication 1, caractérisé en ce que le système d'admission d'eau contient une multiplicité de buses qui sont disposées devant les orifices des tubes, de telle sorte que de l'eau puisse être ainsi injectée sous forme de gouttes dans une partie au moins des tubes.

3. Echangeur thermique selon la revendication 1 ou 2, caractérisé en ce que les tubes occupent plus de 50%, de préférence de 75 à 90% de la surface de la section transversale de l'échangeur thermique.

4. Echangeur thermique selon l'une quelconque des revendications 1 à 3, caractérisé en ce qu'il est composé de plusieurs corps échangeurs de chaleur et en ce que l'organe de commande agit sur l'admission d'eau dans les tubes faisant chaque fois partie d'un ou de plusieurs corps échangeurs de chaleur complets.

5. Echangeur thermique selon l'une quelconque des revendications 1 à 4, caractérisé en ce que le système d'admission d'eau est réalise en vue de l'introduction d'eau dans une partie des tubes ou des corps échangeurs de chaleur, et en ce que cette partie ou la partie restante des tube ; ou des corps echangeurs de chaleur, qui n'est pas réalisée en vue de l'introduction d'eau, est répartie en plusieurs îlots disposés de façon mêlée.

6. Echangeur thermique selon la revendication 4 ou 5, caractérisé en ce que les corps échangeurs de chaleur sont disposés dans un ou plusieurs plans.

7. Echangeur thermique selon l'une quelconque des revendications 1 à 6, caractérisé en ce que le système d'admission d'eau est disposé au-dessus des corps échangeurs de chaleur de telle sorte que dans les conditions de service, l'eau soit envoyée dans les tubes à contre-courant par rapport à l'air.

8. Echangeur thermique selon l'une quelconque des revendications 1 à 6, caractérisé en ce que le système d'admission d'eau est disposé en-dessous des corps échangeurs de chaleur de telle sorte que dans les conditions de service, l'eau soit envoyée dans les tubes à co-courant par rapport à l'air.

Fig.1

Schnitt A-A

Fig.2

Fig.3